# EUROPEAN PATENT APPLICATION

(11) **EP 4 437 827 A1**
(43) Date of publication of application: **02.10.2024**
(21) Application number: 24166913.4
(22) Date of filing: 27.03.2024
(51) Int. Cl.: A01D 34/00, A01D 34/74

(54) **HEIGHT ADJUST SYSTEM FOR A ROBOTIC VEHICLE AND ROBOTIC VEHICLES WITH HEIGHT ADJUST SYSTEMS**

(30) Priority: 31.03.2023 US 202363456168 P
(71) Applicant: Techtronic Cordless GP, Anderson, SC 29621 (US)
(72) Inventor: GHAZALEH, Dawud Nunes, Anderson, 29621 (US); PETERS, II, Frank Allen, Anderson, 29621 (US); CHAPMAN, Seth Harmon, Anderson, 29621 (US); BAKER, David James, Anderson, 29621 (US)
(74) Representative: Zimmermann & Partner Patentanwälte mbB

(57) **Abstract**

Robotic vehicles, height adjust systems to selectively raise and lower a cutting implement of robotic vehicles, and methods of adjusting cutting heights of cutting implements on robotic vehicles are provided. A height adjust system includes a user interface configured to be accessible from an exterior of a body of the robotic vehicle, wherein rotation of the user interface about an axis of rotation adjusts a height of the cutting implement, and wherein the user interface is unlocked to enable rotation by translating the user interface in a direction generally parallel with the axis of rotation prior to rotation of the user interface.

## Description

### FIELD

The present disclosure relates generally to robotic lawn mowers, and more particularly to height adjustment systems for robotic lawn mowers.

### BACKGROUND

Traditionally, yard maintenance was performed manually by human operators using non-powered tools such as push mowers and rakes. Over time, power tools were introduced on the market which significantly reduced the intensity of labor required to complete yard maintenance tasks. Exemplary power tools include powered mowers and eventually riding lawnmowers, leaf blowers, edgers, aerators, and the like. Using these powered tools, what traditionally took an entire day could instead be completed in a matter of hours. Moreover, the quality of work increased as it became easier to standardize operation and increase output capacity.

However, there is now a movement to automate many tasks associated with yard maintenance. In particular, it is becoming desirable to automate lawn cutting operations using robotic vehicles. Robotic vehicles generally allow an operator to select one or more characteristics of a desired outcome and take a hands-off approach to maintaining that desired characteristic over time. That is, the operator can select a mode of operation, schedule a mowing frequency, select mowing zones and robot behavior, and create virtual or physical boundaries for the robotic vehicle to stay within.

As part of automating lawn cutting operations, it is desirable to introduce an easy and efficient method of adjusting cutting height of one or more cutting implements associated with a robotic vehicle. Accordingly, improved height of cut mechanisms for robotic vehicles are desired in the art. In particular, height of cut mechanisms which provide easy to use, compact, and secure operations would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a robotic vehicle is provided. The robotic vehicle includes a body; a cutting implement; and a height adjust system coupled to the cutting implement to selectively raise and lower the cutting implement relative to the body, wherein the height adjust system comprises a user interface accessible from an exterior of the body to permit an operator to select a cutting height for the cutting implement, wherein rotation of the user interface about an axis of rotation adjusts the cutting height, and wherein the user interface is unlocked to enable rotation by translating the user interface in a direction generally parallel with the axis of rotation prior to rotation of the user interface.

In accordance with another embodiment, a height adjust system to selectively raise and lower a cutting implement of a robotic vehicle is provided. The height adjust system includes a user interface configured to be accessible from an exterior of a body of the robotic vehicle, wherein rotation of the user interface about an axis of rotation adjusts a height of the cutting implement, and wherein the user interface is unlocked to enable rotation by translating the user interface in a direction generally parallel with the axis of rotation prior to rotation of the user interface.

In accordance with another embodiment, a method of adjusting a cutting height of a cutting implement on a robotic vehicle is provided. The method includes translating a user interface of a height adjust system of the robotic vehicle in a first direction; rotating the user interface about an axis of rotation oriented parallel with the first direction to select the cutting height; and releasing the user interface after rotating the user interface, wherein releasing the user interface causes the height adjust system to lock at the selected cutting height.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a view of a robotic vehicle in accordance with embodiments of the present disclosure;
FIG. 2 is a partially transparent view of a portion of the robotic vehicle in accordance with embodiments of the present disclosure;
FIG. 3 is a view of a height adjust system for raising and lowering a cutting implement of the robotic vehicle in accordance with embodiments of the present disclosure;
FIG. 4 is a side view of a portion of the height adjust system in accordance with embodiments of the present disclosure as seen with the height adjust system in a locked state;
FIG. 5 is a side view of the portion of the height adjust system in accordance with embodiments of the present disclosure as seen with the height adjust system in an unlocked state;
FIG. 6 is a view of a bracket of the height adjust system in accordance with embodiments of the present disclosure;
FIG. 7 is a view of the bracket of the height adjust system in accordance with embodiments of the present disclosure;
FIG. 8 is a view of a bottom portion of a screw of the height adjust system in accordance with embodiments of the present disclosure;
FIG. 9 is a view of the height adjust system in accordance with embodiments of the present disclosure;
FIG. 10 is a cross-sectional side view of the robotic vehicle as seen along Line A-A in FIG. 1 in accordance with embodiments of the present disclosure;
FIG. 11 is an enlarged view of a portion of the robotic vehicle as seen in Box B in FIG. 10 in accordance with embodiments of the present disclosure; and
FIG. 12 is a flowchart of a method of adjusting a cutting height of a cutting implement of a robotic vehicle in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

As used herein, the term robotic vehicle or the like refers to a device which can operate at least partially autonomously within a workspace. The robotic vehicle can be configured to navigate within the workspace and provide yard maintenance services therein. The robotic vehicle can navigate within the workspace autonomously, making navigational decisions with minimal or no input from a human operator. In some instances, navigational decisions can be made by the robotic vehicle, such as at an onboard logic device. In other instances, navigational decisions can be made at least partially by an external logic device and communicated to the robotic vehicle, e.g., wirelessly. For instance, navigational decisions can be made at a remote computer, a mobile device, a base station such as a dock associated with the robotic vehicle, or the like. In some instances, the robotic vehicle can receive ongoing navigational instructions from the external logic device. In other instances, the robotic vehicle can receive navigational instructions from the external logic device and store the instructions in an onboard memory. As used herein, logic devices may refer to one or more controllers including non-transitory computer-readable memory storing instructions that, when executed by one or more processors, cause the one or more processors to generate instructions which control operations, such as navigation, of the robotic vehicle.

In some instances, the robotic vehicle can operate autonomously using instructions at least partially formed at a user interface by a human operator. The human operator can utilize the user interface (sometimes referred to as a human machine interface) to control one or more aspects of the robotic vehicle. For instance, the human operator can schedule operational times, set and regulate different operational zones for travel and operating, set yard maintenance operational priorities, select between different operational types, or the like.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, robotic vehicles described herein can include height adjust systems which allow for easy to use, compact, and secure operation. The height adjust systems described herein can generally include an interface accessible from an external position of the robotic vehicle which allow an operator to adjust the height of cut of one or more cutting implements associated with the robotic vehicle. The interface may include a rotatable dial which, when rotated, causes a helical thread to raise and lower a lift linkage associated with the height adjust system. The height adjust system can be spring biased to a locked state to prevent unwanted height of cut drift which might otherwise occur in a non-sprung system. These and other advantages of the height adjust system and robotic vehicles with height adjust systems will be described in greater detail below.

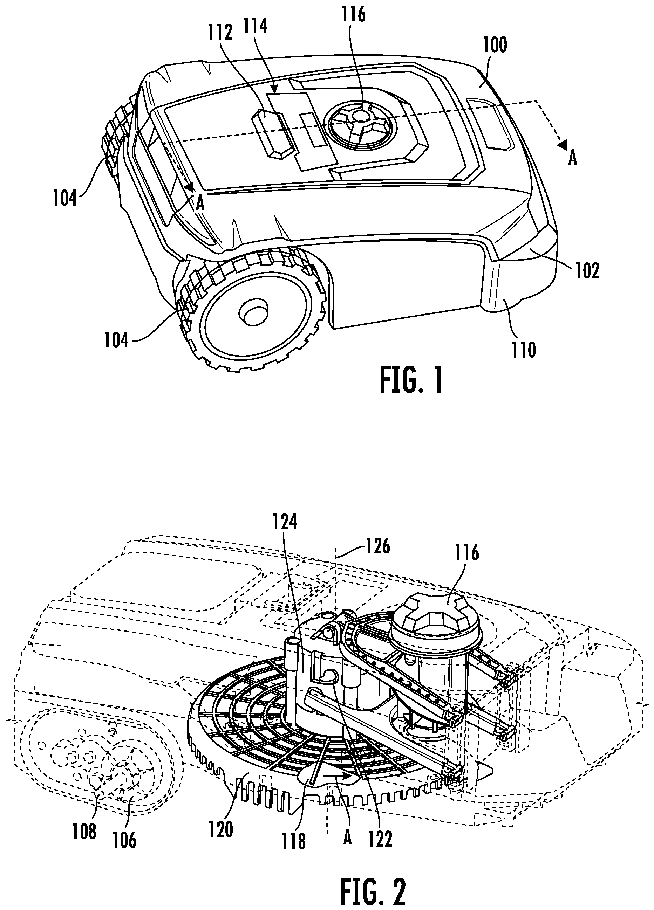

Referring now to the drawings, FIG. 1 illustrates a robotic vehicle 100 in accordance with an exemplary embodiment of the present disclosure. The robotic vehicle 100 illustrated in FIG. 1 is an outdoor robotic vehicle capable of performing one or more yard maintenance operations. The robotic vehicle 100 may be a robotic lawn mower capable of cutting grass and maintaining a lawn surface.

The robotic vehicle 100 can generally include a body 102 which can cover and house one or more components of the robotic vehicle 100. In some instances, the body 102 can have a single-piece, monolithic construction. In other instances, the body 102 can include a multi-piece construction. For example, the body 102 can be formed from a plurality of paneled sections which may be coupled together to form an outer shell of the robotic vehicle 100. In some instances, the multi-piece construction can include a structural component and an aesthetic component, such as a faring, coupled to the structural component.

The robotic vehicle 100 can further include a walking element, such as a plurality of wheels 104. In some instances, the wheels 104 can have a same, or generally same, shape or size as compared to one another. For example, the wheels 104 can define a central hub and a tread disposed therearound. The wheels 104 may each be driven by a drivetrain 106 (FIG. 2) having a motor (not illustrated). In some instances, each of the wheels 104 can be driven by a separate motor. In other instances, the wheels 104 can be driven by a common motor or a common drivetrain. The drivetrain 106 may include gears coupled to an output shaft 108 which is coupled to the wheels 104 and configured to transmit power from the motor to the wheels 104. The motor(s) may be in communication with a central logic device of the robotic vehicle 100 which can inform navigational decisions and communicate instructions to the motor(s) to affect movement of the robotic vehicle 100 in accordance with a navigational decision.

In an embodiment, the robotic vehicle 100 can further include one or more passive wheels 110. The one or more passive wheels 110 may not be driven and may freely rotate both along the ground and about a vertical axis to allow the one or more passive wheels 110 to reorient based on the movement inputs created by the wheels 104. The one or more passive wheels 110 may detect when the robotic vehicle 100 is lifted from the ground or when the robotic vehicle 100 encounters a drop off. For example, at least one of the passive wheels 110 can be moveably connected to the body 102 such that passive wheel 110 can translate towards and away from the body 102. A sensor (not illustrated) can detect this movement and determine that the robotic vehicle 100 is at a drop off, such as a cliff edge, when the movement of the passive wheel 110 exceeds a threshold value. In response, the robotic vehicle 100 can change direction to avoid falling.

The robotic vehicle 100 can further include a button 112, a human machine interface (HMI) 114, or both. In an embodiment, the button 112 can be an emergency stop button to allow an operator to quickly disable further activity of the robotic vehicle, e.g., in case of an emergency. The button 112 may alternatively be a start/stop button which is capable of both starting and stopping the robotic vehicle 100. The HMI 114 can include, for example, a plurality of user inputs and a display. The display may allow the robotic vehicle 100 to visually display one or more functional or operational characteristics of the robotic vehicle 100. For example, the display can show a current status of the robotic vehicle 100, remaining charge of one or more onboard batteries (not illustrated), a time to recharge, information relating to a hazardous situation, an operational schedule or an event associated therewith, identification information such as an owner of the robotic vehicle 100, or other information which may assist the operator in using the robotic vehicle 100 as part of yard maintenance.

The robotic vehicle 100 can further include a user interface 116 which is accessible from an exterior of the body 102. Using the user interface 116, an operator can select a height for an implement of the robotic vehicle 100. More particularly, using the user interface 116, the operator can select a cutting height for a cutting implement 118 (FIG. 2) relative to an underlying ground surface.

Referring to FIG. 2, the cutting implement 118 can be at least partially surrounded by a guard 120. The guard 120 can protect people and nearby objects from the cutting implement 118 and any debris which might be kicked up by the cutting implement 118. The guard 120 can generally extend over an upper portion of the cutting implement 118 and around a circumference of a path of travel A of the cutting implement 118. The guard 120 can include a castellated outer edge which prepares grass entering the guard 120 for cutting by combing the grass between adjacent castellated features.

The cutting implement 118 can generally include a cutting edge configured to cut grass extending from an underlying ground surface. The cutting edge of the cutting implement 118 can move along the path of travel A to cut grass and other debris (such as leaves). The cutting implement 118 may include a single cutting implement, such as a single blade which extends across an entire diameter of the guard 120, or a plurality of cutting implements, each of which move along the path of travel A to cut grass and other debris. As used herein, the term cutting implement 118 is intended to refer to embodiments including one cutting implement and a plurality of cutting implements, such as at least two cutting implements, at least three cutting implements, at least four cutting implements, at least five cutting implements, or at least six cutting implements.

The cutting implement 118 may be driven to move along the path of travel A by a motor 122 which rotatably drives the cutting implement 118 about a rotational axis 126. The rotational axis 126 can extend in a generally vertical direction. In an embodiment, the rotational axis 126 can remain at a generally fixed relative angle as the cutting implement 118 is raised and lowered using the user interface 116 in a manner as described hereinafter. In this regard, the cutting implement 118 can remain at a prescribed orientation relative to the underlying ground surface regardless of the height of the cutting implement 118 relative to the underlying ground surface.

The motor 122 can be disposed at least partially within, such as fully within, a motor cover 124. In an embodiment, the motor cover 124 can be coupled to the guard 120. In another embodiment, the motor cover 124 and the guard 120 can be integrally formed together so as to comprise a single piece. The motor cover 124 and guard 120 can move together as the cutting implement 118 is raised and lowered. In this regard, a distance between the motor 122 and the cutting implement 118 can remain at a prescribed distance relative to one another regardless of the height of the cutting implement 118 relative to the underlying ground surface.

The cutting implement 118 is depicted in FIG. 2 at a relatively raised position with respect to the underlying ground surface. That is, a distance between the cutting implement 118 and the underlying ground surface is relatively large. The cutting implement 118 can be lowered to be closer to the underlying ground surface using a height adjust system described here below.

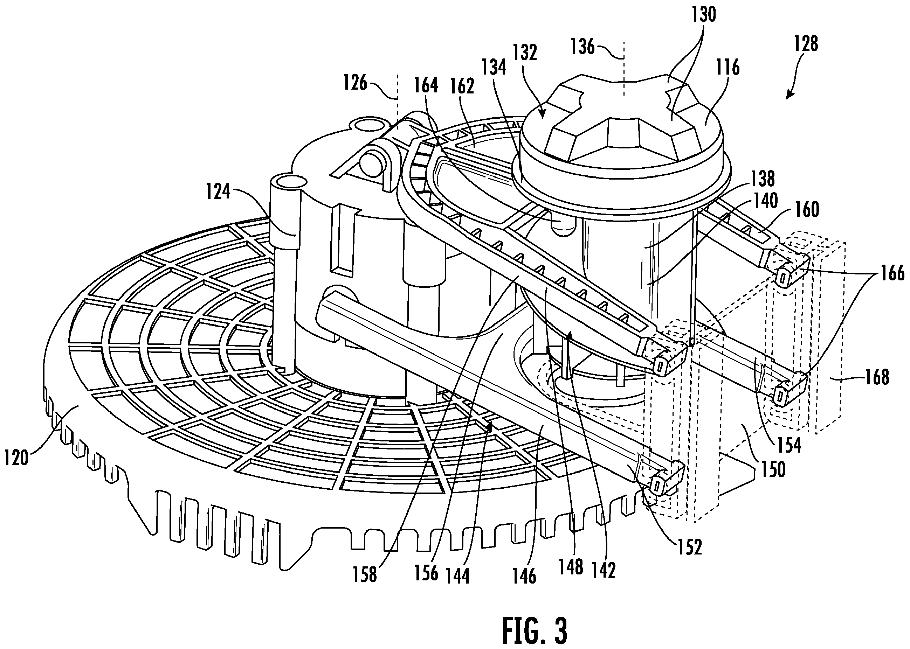

FIG. 3 depicts a view of a height adjust system 128 of the robotic vehicle 100 while omitting other components of the robotic vehicle 100 for simplicity and easier understanding. The height adjust system 128 can be coupled to the cutting implement 118 to allow an operator to selective raise and lower the cutting implement 118 relative to the body 102 and an underlying ground surface.

As depicted, the height adjust system 128 can include the aforementioned user interface 116. The user interface 116 can have a generally puck-shaped profile with user-engageable features 130 disposed cutouts 132. The user-engageable features 130 can extend from the body 102 (FIGS. 1 and 2) of the robotic vehicle 100 to allow an operator to interact with and move the user interface 116. A lip 134 can be disposed at a lower end of the user interface 116 and project radially outward from the puck-shaped profile of the user interface 116. The lip 134 can extend around at least a portion of a circumference of the user interface 116.

The user interface 116 can rotate about an axis of rotation 136. In an embodiment, the axis of rotation 136 can be generally parallel with the rotational axis 126. The user interface 116 can rotate in a first rotational direction about the axis of rotation 136 to raise the cutting implement 118. The user interface 116 can rotate in a second rotational direction about the axis of rotation 136 to lower the cutting implement 118. The first and second rotational directions can be opposite one another. At least one of the user interface 116 or body 102 can include indicia which indicate which direction of rotation corresponds with raising the cutting implement 118 and which direction of rotation corresponds with lowering the cutting implement 118.

In an embodiment, the user interface 116 can be coupled with a screw 138. In certain instances, the user interface 116 can be directly coupled with the screw 138. In other instances, the user interface 116 can be indirectly coupled with the screw 138. The screw 138 can include a body 140 and a helical surface 142. In an embodiment, the helical surface 142 can extend radially outward from the body 140.

The screw 138, and thus the helical surface 142, can rotate when the user interface 116 is rotated. In an embodiment, the helical surface 142 can rotate about the axis of rotation 136 when the user interface 116 is rotated. In some instances, angular displacement of the helical surface 142 can be rotationally locked to the angular displacement of the user interface 116 at a 1:1 ratio whereby the helical surface rotates by the same angular displacement as the user interface 116. In other instances, angular displacement of the helical surface 142 can be rotationally locked to the angular displacement of the user interface 116 at a ratio other than 1:1, such as for example, 1:2, 1:3, 1:4, 2: 1, 3:1, or 4:1. The disclosure herein is not intended to be limited to the exemplary ratios described above. Yet other relative angular displacement ratios are contemplated herein without deviating from the scope of the disclosure. In yet other instances, the relative angular displacement of the helical surface 142 can be variable relative to the angular displacement of the user interface 116. In this regard, an operator can adjust the relative displacement of the helical surface 142 relative to the angular displacement of the user interface 116.

In an embodiment, the height adjust system 128 can further include a linkage 144 coupled to the cutting implement 118 through the guard 120 or motor cover 124. The linkage 144 can include a first arm 146 and a second arm 148 which are movably coupled to a bracket 150. The first and second arms 146 and 148 can further be coupled to the guard 120 or motor cover 124. The first and second arms 146 and 148 can pivot relative to each of the bracket 150 and the guard 120 or motor cover 124 to raise and lower the cutting implement 118 relative to the bracket 150.

The first and second arms 146 and 148 can take on many different arrangements. An exemplary arrangement is described below with reference to FIG. 3. The first arm 146 can include a generally H-shaped configuration defining opposite legs 152 and 154 and a central crossing member 156 interconnecting the legs 152 and 154. The legs 152 and 154 can each extend between the bracket 150 and the motor cover 124 and be pivotally coupled with each of the bracket 150 and motor cover 124. The second arm 148 can have a generally U-shaped configuration defining opposite legs 158 and 160 and a connecting member 162 interconnecting the legs 158 and 160. The legs 158 and 160 can each pivotally couple with the bracket 150. The connecting member 162 can pivotally couple with the motor cover 124. Due to the dual arm linkage design, the orientation of the motor cover 124, and thus the orientation of the cutting implements 118, can remain relatively unchanged as the motor cover 124 is lowered relative to the bracket 150.

The first arm 148 can further include an interfacing feature 164. By way of non-limiting example, the interfacing feature 164 can include a projection extending from the connecting member 162 of the first arm 148. The interfacing feature 164 can interact with the helical surface 142, such as be supported by the helical surface 142, such that rotation of the helical surface 142 causes the first arm 148 to pivot relative to the bracket 150 to raise or lower the cutting implement 118. Thus, as an operator rotates the user interface 116, the helical surface 142 of the screw 138 rotates which, in turn, causes the interfacing feature 164, and thereby the first arm 148, to pivot, resulting in raising or lowering of the cutting implement 118.

As depicted in FIG. 3, the bracket 150 can include receiving areas 166 which form pivotal interfaces with the first and second arms 146 and 148. The bracket 150 can also include an interface 168 for engagement with the body 102 of the robotic vehicle 100. By way of non-limiting example, the interface 168 can include a T-shaped projection which extends from the bracket 150 and is received in a T-shaped slot in a portion of the body 102 as described below.

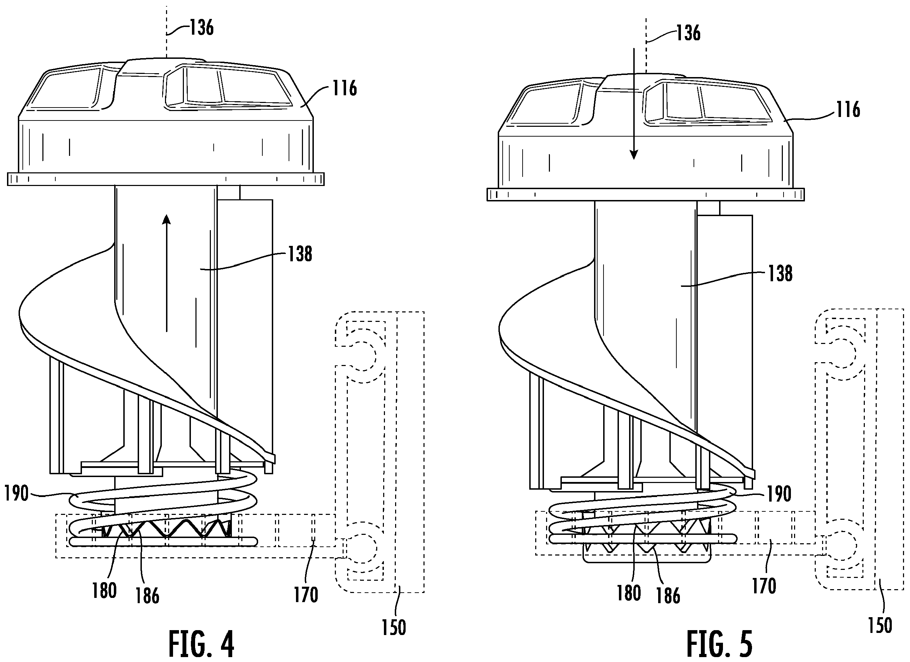

As described above, rotation of the user interface 116 can result in adjustment of the cutting height of the cutting implement 118. More specifically, rotation of the helical surface 142 causes vertical translation of the interfacing feature 164 which is coupled to the cutting implement 118 through the linkage 144 and the guard 120 or motor cover 124. It may be desirable to maintain the cutting implement 118 at a desired cutting height once the operator releases the user interface 116. FIGS. 4 to 10 illustrate embodiments of exemplary components of the height adjust system 128 which can maintain the cutting implement 118 at the desired cutting height as set by the user interface 116.

As illustrated in FIG. 4, the user interface 116 and screw 138 are in a resting state whereby the height adjust system 128 is locked and the user interface 116 is prevented from rotating about the axis of rotation 136. Conversely, FIG. 5 illustrates the user interface 116 and screw 138 in a biased state whereby the height adjust system 128 is unlocked and the user interface 116 is permitted to rotate about the axis of rotation 136. That is, the view shown in FIG. 5 is with the user interface 116 translated downward towards a flange 170 of the bracket 150 as compared to the view shown in FIG. 4.

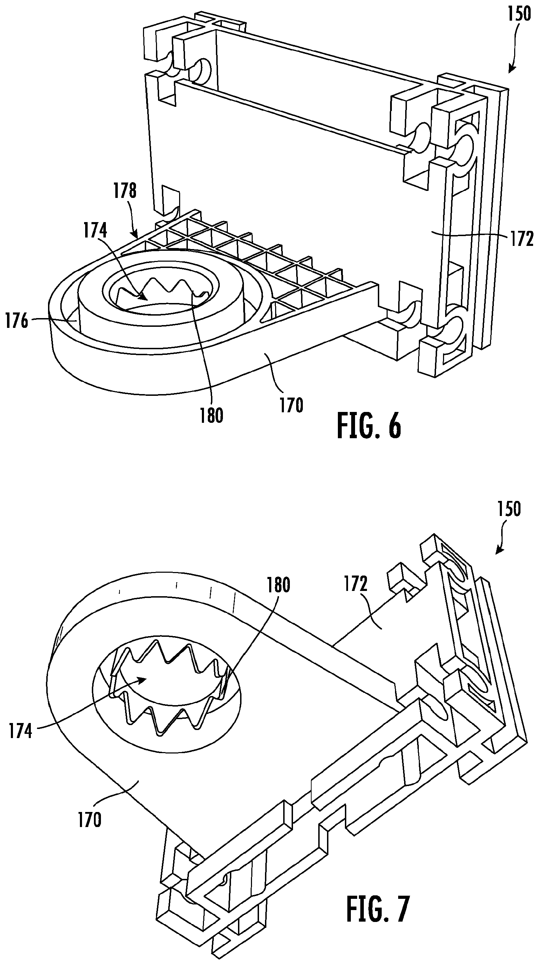

Referring to FIGS. 6 and 7, the flange 170 can extend from a support wall 172 of the bracket 150. By way of a non-limiting embodiment, the flange 170 can extend perpendicular to the support wall 172. However, in other embodiments the flange 170 can extend from the support wall 172 at an angle offset from 90° relative to the support wall 172. The flange 170 can define an opening 174. In an embodiment, the opening 174 can pass through the flange 170. As depicted in FIG. 6, the flange 170 can define a spring retention feature 176 to retain a spring at the opening 174. In an embodiment, the spring retention feature 176 comprises a trough extending around the opening 174 on a first side 178 of the flange 170.

As depicted in FIGS. 6 and 7, the bracket 150 can define rotational stop elements 180. The rotational stop elements 180 can include features which interface with the screw 138, or a portion coupled therewith as described below, to selectively prevent rotation of the screw 138 relative to the bracket 150. The rotational stop elements 180 can be disposed around the opening 174. By way of non-limiting example, the rotational stop elements 180 can include an undulating profile, a castellated profile, a triangulated profile including a plurality of adjacent triangular points, or the like.

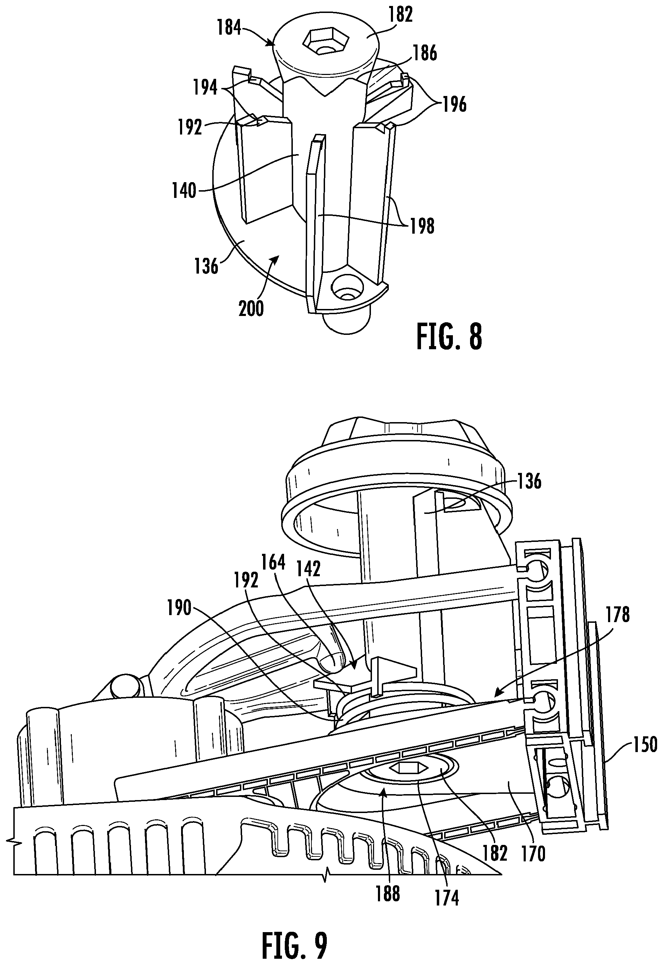

FIG. 8 shows a bottom view of the screw 138 with a locking feature 182 coupled to an axial end 184 of the screw 138. In an embodiment, the locking feature 182 can be integral with the screw 138. In another embodiment, the locking feature 182 can include a discrete piece that is removably coupled to the screw 138. The locking feature 182 can define complementary rotational stop elements 186 which selectively interface with the rotational stop elements 180 of the bracket 150 to prevent rotation of the screw 138 relative to the bracket 150. The complementary rotational stop elements 186 can define a surface shape similar to the shape of the rotational stop elements 180. For example, the complementary rotational stop elements 186 can include an undulating profile, a castellated profile, a triangulated profile including a plurality of adj acent triangular points, or the like.

As shown in FIG. 9, the locking feature 182 can extend be disposed at the opening 174 such that the complementary rotational stop elements 186 (FIG. 8) selectively interface with the rotational stop elements 180 (FIGS. 6 and 7) to prevent relative rotation therebetween when the user interface 116 is in the resting state.

The following description is a non-limiting example of an installation procedure for coupling the screw 138 and locking feature 182 to the bracket 150. The procedure can include installing the screw 138 in the opening 174 from the first side 178 of the flange 170 and installing the locking feature 182 in the opening 174 from a second side 188 of the flange 170 opposite the first side 178. By way of non-limiting example, the locking feature 182 and screw 138 can be coupled together through an integral threaded interface including threads on each of the screw 138 and locking feature 182, by a fastener (e.g., a threaded fastener), a bayonet connection, through interference fit, using an adhesive, by mechanical crimping, using a ball detent, another attachment method, or any combination thereof.

A spring 190 can bias the screw 138 to interface the rotational stop elements 180 and complementary rotational stop elements 186 together. In an embodiment, the screw 138 can include a spring support 192 which forms a seat for the spring 190. The spring 190 can be compressed between the spring support 192 and the spring retention feature 176. The spring 190 can bias the spring support 192 and the spring retention feature 176 apart from one another in a direction generally parallel with the axis of rotation 136.

Referring again to FIG. 8, the spring support 192 can include a plurality of surfaces 194 each configured to support the spring 190. The surfaces 194 can include retention features 196 which retain the spring 190 and prevent the spring 190 from sliding off the surfaces 194. In an embodiment, the surfaces 194 can be disposed on ends of fins 198 extending along the screw 138. The fins 198 can be coupled to the body 140 of the screw 138. The fins 198 can be spaced apart from one another about a circumference of the body 140 such that the surfaces 194 are spaced apart from one another in the circumferential direction. The fins 198 can terminate at an underside 200 of the helical surface 142 to avoid interfering with the interface between the helical surface 142 and the interfacing feature 164 as shown in FIG. 9.

Referring again to FIGS. 4 and 5, in the resting state depicted in FIG. 4, the rotational stop elements 180 and complementary rotational stop elements 186 can be interfaced together in a locked manner to prevent rotation of the user interface 116 about the axis of rotation 136. In the biased state depicted in FIG. 5, the rotational stop elements 180 and complementary rotational stop elements 186 can be disengaged from one another in an unlocked manner to allow rotation of the user interface 116 about the axis of rotation 136. Thus, it should be understood that the user interface 116 is unlocked to enable rotation of the screw 138, and thus raising and lowering the cutting implement, by translating the user interface 116 in a direction generally parallel with the axis of rotation 136 prior to rotation of the user interface 116.

In certain instances, the operator may be required to translate the user interface 116 by a distance sufficient to fully unseat the rotational stop elements 180 and the complementary rotational stop elements 186 from one another. For instance, castellated rotational stop elements 180 and complementary rotational stop elements 186 may require full clearance prior to rotation. However, in other instances, the operator may not be required to translate the user interface 116 by a distance to fully unseat the rotational stop elements 180 and the complementary rotational stop elements 186 from one another. For example, undulating rotational stop elements 180 and complementary rotational stop elements 186 may begin to rotate relative to one another prior to fully unseating from each other. Moreover, in certain instances the operator may utilize the undulating profiles to initiate unlocking by rotating the user interface 116 with enough force that translation of the screw 138 is caused by the undulated profiles of the rotational stop elements 180 and complementary rotational stop elements 186.

In an embodiment, the spring 190 can bias the user interface 116 in a direction generally opposite to the direction of translation performed to unlock the user interface 116. Thus, upon selecting a desired cutting height by rotating the user interface 116, the operator can release the user interface 116, allowing the spring 190 to return the user interface to the locked position depicted in FIG. 4. The operator can readjust the cutting height by reengaging the user interface 116 as described above.

In certain instances, the cutting implement 118 or guard 120 may contact an underlying object which causes the cutting implement 118 and guard 120 to lift upward. For example, large rocks or undulating terrain can impact the guard 120. If the guard 120 and cutting implement 118 were fixed in place, the entire robotic vehicle 100 might be lifted from the ground, which could damage one or more components thereof, trigger cliff detection, e.g., by the passive wheel 110, or the like. To mitigate this danger, the height adjust system 128 can permit the cutting implement to move higher than a selected cutting height while preventing the cutting implement from moving lower than the selected cutting height. For instance, referring to FIG. 3, the interfacing feature 164 is disposed on the helical surface 142 below the interfacing feature 164 but unconstrained by any surfaces above the interfacing feature. As a result, the interfacing feature 164 is prevented from moving downward by the helical surface 142 while simultaneously permitted to move upward at least some nominal distance provided by the body 102 of the robotic vehicle 100 and other components associated therewith. Thus, the cutting implement 118 and guard 120 can adapt to underlying terrain as it comes. The height adjust system 128 can be biased to return to the pre-displaced state, i.e., the desired cutting height, once the obstacle is cleared. For example, gravitational force can restore the cutting height of the cutting implement. Alternatively, or in addition, one or more biasing elements, such as springs (not illustrated) can bias the height adjust system 128 in a downward direction.

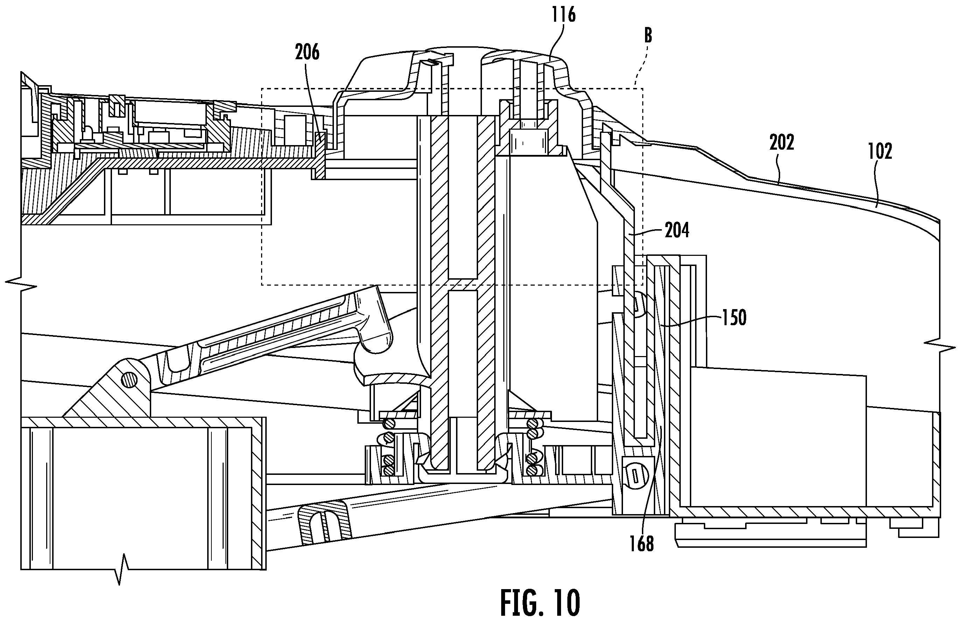

FIG. 10 illustrates a cross-sectional side view of the robotic vehicle 100 in accordance with an exemplary embodiment as seen along Line A-A in FIG. 1. As seen in FIG. 10, the body 102 can generally include a top chassis 202 forming an upper part of the body 102 and a bottom chassis 204 forming a lower part of the body 102. The top and bottom chassis 202 and 204 can be coupled together to form the body 102.

In an embodiment, the height adjust system 128 can be formed, i.e., the components thereof can be operationally coupled together, prior to coupling the height adjust system 128 (or any component thereof) to the body 102. In an embodiment, the height adjust system 128 can be coupled to the bottom chassis 204. For example, the interface 168 of the bracket 150 can be coupled with a complementary component of the bottom chassis 204. In an embodiment, the height adjust system 128 can be coupled to the bottom chassis 204 through relative linear motion therebetween. For example, the interface 168 can include a T-shaped projection which slides within a T-shaped receiving groove disposed in the bottom chassis 204. The T-shaped projection can be slid within the T-shaped receiving groove until seating therein.

In an embodiment, the bottom chassis 204 can be coupled to the top chassis 202 after the height adjust system 128 is coupled to the bottom chassis 204. In an embodiment, the lip 134 of the user interface 116 can be disposed adjacent to an underside 214 of the top chassis 202 when the height adjust system 128 is seated at the body 102.

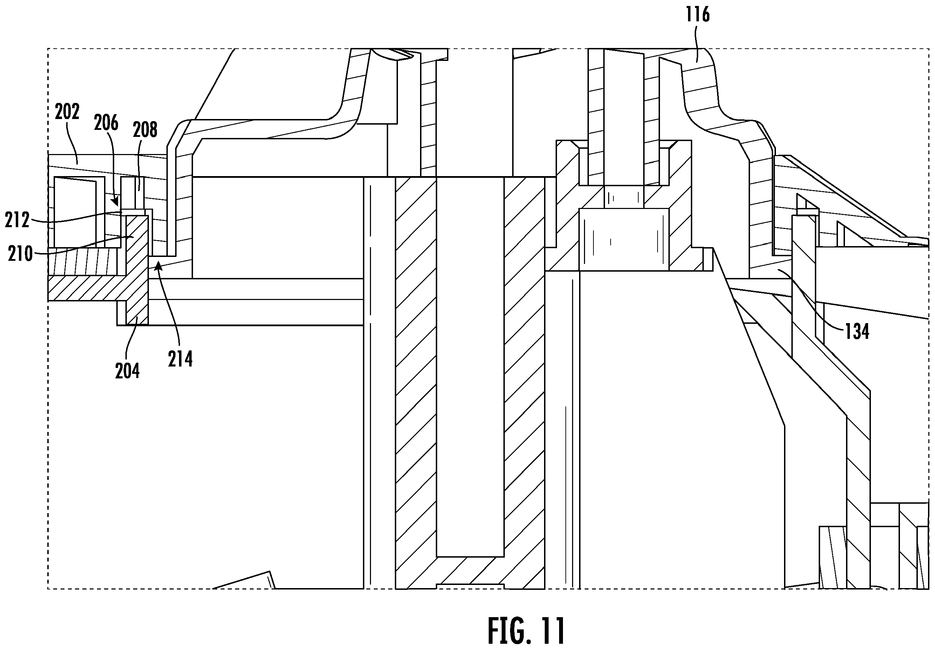

The top and bottom chassis 202 and 204 can be coupled together at a location 206 adjacent to the user interface 116. FIG. 11 illustrates an enlarged portion of the robotic vehicle 100 as seen in Box B in FIG. 10. The location 206 depicted in FIG. 11 includes a grooved interface coupling together the top and bottom chassis 202 and 204. By way of non-limiting example, the top chassis 202 can define a channel 208 and the bottom chassis 204 can define a projection 210 which can interface with the channel 208. This configuration can be reversed such that the top chassis 202 defines the projection 210 and the bottom chassis 204 defines the channel 208. The channel 208 and projection 210 can extend around at least a portion of a perimeter of the user interface 116. For instance, the channel 208 and projection 210 can extend around at least 25% of the perimeter of the user interface 116, at least 50% of the perimeter of the user interface 116, at least 75% of the perimeter of the user interface 116, or at least 90% of the perimeter of the user interface 116. In a particular embodiment, the channel 208 and projection 210 can extend around the entire perimeter of the user interface 116. In a more particular embodiment, at least the channel 208 can extend continuously around the entire perimeter of the user interface 116. In an embodiment, the channel 208 and projection 210 can be interfaced together through an interference fit, an adhesive, a crimp, a threaded connection, a bayonet connection, or the like. A seal 212 can be disposed at least partially within the channel 208 to seal an interior portion of the body 102 from environmental exposure.

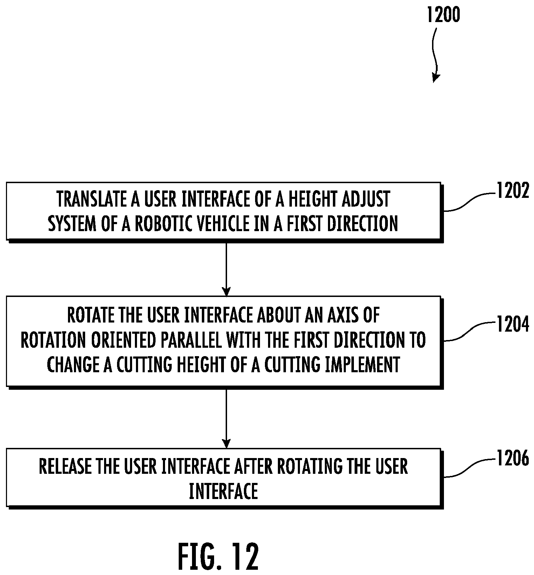

FIG. 12 illustrates an exemplary method 1200 of adjusting a cutting height of a cutting implement on a robotic vehicle such as the robotic vehicle 100 described above.

The cutting height of the cutting implement can be controlled by a user interface of a height adjust system coupled with the cutting implement. When the user interface is unbiased, i.e., not acted upon by an operator, the height adjust system is locked. In the locked state, the cutting implement is prevented from moving lower towards the underlying ground surface. However, the cutting implement may be allowed to move up away from the underlying ground surface, e.g., upon encountering an underlying obstacle.

The method 1200 of adjusting the cutting height can include a step 1202 of translating the user interface in a first direction. Translating the user interface in the first direction can unlock the user interface to permit adjustment of the cutting height of the cutting implement.

The user interface can be at least partially exposed from a body of the robotic vehicle to allow an operator to access the user interface. The step 1202 of translating the user interface can involve pushing the user interface in a direction generally into the body. Displacement of the user interface can be at least 1 centimeter (cm), such as at least 2 cm, at least 3 cm, at least 4 cm, or at least 5 cm. Upon achieving maximum displacement, the user interface may no longer be pushed into the body. As the operator pushes the user interface into the body, a spring operatively coupled to the user interface can compress to provide resistance against further displacement of the user interface. If the operator releases the user interface during step 1202, the user interface can rebound to the previous, unbiased state.

The method 1200 can further include a step 1204 of rotating the user interface about an axis of rotation oriented parallel with the first direction to change the cutting height of the cutting implement. In an embodiment, the axis of rotation can be coaxial with the first direction. The step 1204 may be performed after the user interface is displaced a sufficient distance in the first direction. Displacement of the user interface in the first direction at step 1202 can be performed until a locking interface formed by a pair of complementary rotational stop elements is unlocked. The operator can then rotate the user interface at step 1204 to raise or lower the cutting height of the cutting implement. By way of non-limiting example, rotating the user interface in a clockwise direction can lower the cutting implements while rotating the user interface in a counterclockwise direction can raise the cutting implements.

During step 1204, the complementary rotational stop elements can realign with one another at various different positions. Each position is associated with a different cutting height. Indicia can be provided, e.g., at the body of the robotic vehicle, to allow the operator to determine the estimated cutting height of the cutting implement associated with each stop element.

Once the operator selects the desired cutting height at step 1204, the operator can perform a step 1206 of releasing the user interface. Upon release, the user interface can translate in a second direction opposite the first direction. Releasing the user interface can cause the height adjust system to lock at the selected cutting height. In some instances, releasing the user interface causes the user interface to rotate about the axis of rotation until the pair of complementary rotational stop elements are fully locked, i.e., aligned and seated with one another.

Further aspects of the invention are provided by one or more of the following embodiments:
Embodiment 1. A robotic vehicle comprising: a body; a cutting implement; and a height adjust system coupled to the cutting implement to selectively raise and lower the cutting implement relative to the body, wherein the height adjust system comprises a user interface accessible from an exterior of the body to permit an operator to select a cutting height for the cutting implement, wherein rotation of the user interface about an axis of rotation adjusts the cutting height, and wherein the user interface is unlocked to enable rotation by translating the user interface in a direction generally parallel with the axis of rotation prior to rotation of the user interface.
Embodiment 2. The robotic vehicle of any one or more of the embodiments, wherein the height adjust system further comprises: a linkage coupled to the cutting implement; and a helical surface coupled to the user interface and rotatable with the user interface, wherein rotation of the helical surface about the axis of rotation causes the linkage to pivot to raise or lower the cutting implement.
Embodiment 3. The robotic vehicle of any one or more of the embodiments, wherein the linkage comprises: a bracket coupled to the body: a first arm extending between the bracket and the cutting implement; and a second arm extending between the bracket and the cutting implement, wherein the second arm comprises an interfacing feature supported by the helical surface such that rotation of the helical surface causes the second arm to pivot relative to the bracket to raise or lower the cutting implement.
Embodiment 4. The robotic vehicle of any one or more of the embodiments, wherein the helical surface is part of a screw, wherein the screw extends into an opening in a bracket of the linkage, and wherein the bracket and screw interface at a plurality of rotational stop elements, each stop elements associated with a different height of the cutting implement.
Embodiment 5. The robotic vehicle of any one or more of the embodiments, wherein the height adjust system prevents the cutting implement from moving lower than a selected cutting height, and wherein the height adjust system permits the cutting implement to move higher than the selected cutting height.
Embodiment 6. The robotic vehicle of any one or more of the embodiments, wherein translating the user interface in the direction generally parallel with the axis of rotation causes complementary rotational stop elements to unseat from one another to permit rotation of the user interface.
Embodiment 7. The robotic vehicle of any one or more of the embodiments, further comprising a spring biasing the user interface in a direction generally opposite to the direction of translation performed to unlock the user interface.
Embodiment 8. The robotic vehicle of any one or more of the embodiments, wherein the body comprises a top chassis forming an upper part of the body and a bottom chassis forming a lower part of the body, wherein the height adjust system is coupled to the bottom chassis, and wherein the bottom chassis is coupled to the top chassis at a location adjacent to the user interface.
Embodiment 9. A height adjust system to selectively raise and lower a cutting implement of a robotic vehicle, the height adjust system comprising: a user interface configured to be accessible from an exterior of a body of the robotic vehicle, wherein rotation of the user interface about an axis of rotation adjusts a height of the cutting implement, and wherein the user interface is unlocked to enable rotation by translating the user interface in a direction generally parallel with the axis of rotation prior to rotation of the user interface.
Embodiment 10. The height adjust system of any one or more of the embodiments, further comprising a linkage coupled to the cutting implement; and a helical surface coupled to the user interface and rotatable with the user interface, wherein rotation of the helical surface causes the linkage to pivot to raise or lower the cutting implement.
Embodiment 11. The height adjust system of any one or more of the embodiments, wherein the linkage comprises: a bracket configured to be coupled to the body of the robotic vehicle: a first arm extending between the bracket and the cutting implement; and a second arm extending between the bracket and the cutting implement, wherein the second arm comprises an interfacing feature supported by the helical surface such that rotation of the helical surface causes the first arm to pivot relative to the bracket to raise or lower the cutting implement.
Embodiment 12. The height adjust system of any one or more of the embodiments, wherein the helical surface interfaces with a bracket of the height adjust system at a plurality of rotational stop elements, each rotational stop element associated with a different height of the cutting implement.
Embodiment 13. The height adjust system of any one or more of the embodiments, wherein the height adjust system is configured to prevent the cutting implement from moving lower than a selected cutting height, and wherein the height adjust system is configured to permit the cutting implement to move higher than the selected cutting height.
Embodiment 14. The height adjust system of any one or more of the embodiments, further comprising a spring biasing the user interface in a direction generally opposite to the direction of translation performed to unlock the user interface.
Embodiment 15. A method of adjusting a cutting height of a cutting implement on a robotic vehicle, the method comprising: translating a user interface of a height adjust system of the robotic vehicle in a first direction; rotating the user interface about an axis of rotation oriented parallel with the first direction to select the cutting height; and releasing the user interface after rotating the user interface, wherein releasing the user interface causes the height adjust system to lock at the selected cutting height.
Embodiment 16. The method of any one or more of the embodiments, wherein translating the user interface is performed until a locking interface formed by a pair of complementary rotational step features is unlocked.
Embodiment 17. The method of any one or more of the embodiments, wherein releasing the user interface causes the user interface to rotate about the axis of rotation until the pair of complementary rotational step features are fully locked.
Embodiment 18. The method of any one or more of the embodiments, wherein rotating the user interface is performed after at least partially translating the user interface in the first direction.
Embodiment 19. The method of any one or more of the embodiments, wherein releasing the user interface causes the user interface to translate in a second direction opposite the first direction.
Embodiment 20. The method of any one or more of the embodiments, wherein the height adjust system comprises a linkage pivotally coupled to the cutting implement about a pivot axis oriented generally perpendicular to the axis of rotation, and wherein translating the user interface causes a height of the cutting implement to drop.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A robotic vehicle comprising:
a body;
a cutting implement; and
a height adjust system coupled to the cutting implement to selectively raise and lower the cutting implement relative to the body,
wherein the height adjust system comprises a user interface accessible from an exterior of the body to permit an operator to select a cutting height for the cutting implement,
wherein rotation of the user interface about an axis of rotation adjusts the cutting height, and
wherein the user interface is unlocked to enable rotation by translating the user interface in a direction generally parallel with the axis of rotation prior to rotation of the user interface.

2. The robotic vehicle of claim 1, wherein the height adjust system further comprises:
a linkage coupled to the cutting implement; and
a helical surface coupled to the user interface and rotatable with the user interface,
wherein rotation of the helical surface about the axis of rotation causes the linkage to pivot to raise or lower the cutting implement.

3. The robotic vehicle of claim 2, wherein the linkage comprises:
a bracket coupled to the body:
a first arm extending between the bracket and the cutting implement; and
a second arm extending between the bracket and the cutting implement,
wherein the second arm comprises an interfacing feature supported by the helical surface such that rotation of the helical surface causes the second arm to pivot relative to the bracket to raise or lower the cutting implement.

4. The robotic vehicle of claim 2, wherein the helical surface is part of a screw, wherein the screw extends into an opening in a bracket of the linkage, and wherein the bracket and screw interface at a plurality of rotational stop elements, each stop elements associated with a different height of the cutting implement.

5. The robotic vehicle of claim 1, wherein the height adjust system prevents the cutting implement from moving lower than a selected cutting height, and wherein the height adjust system permits the cutting implement to move higher than the selected cutting height.

6. The robotic vehicle of claim 1, wherein translating the user interface in the direction generally parallel with the axis of rotation causes complementary rotational stop elements to unseat from one another to permit rotation of the user interface.

7. The robotic vehicle of claim 1, further comprising a spring biasing the user interface in a direction generally opposite to the direction of translation performed to unlock the user interface.

8. The robotic vehicle of claim 1, wherein the body comprises a top chassis forming an upper part of the body and a bottom chassis forming a lower part of the body, wherein the height adjust system is coupled to the bottom chassis, and wherein the bottom chassis is coupled to the top chassis at a location adjacent to the user interface.

9. A height adjust system to selectively raise and lower a cutting implement of a robotic vehicle, the height adjust system comprising:
a user interface configured to be accessible from an exterior of a body of the robotic vehicle,
wherein rotation of the user interface about an axis of rotation adjusts a height of the cutting implement, and
wherein the user interface is unlocked to enable rotation by translating the user interface in a direction generally parallel with the axis of rotation prior to rotation of the user interface.

10. The height adjust system of claim 9, further comprising
a linkage coupled to the cutting implement; and
a helical surface coupled to the user interface and rotatable with the user interface,
wherein rotation of the helical surface causes the linkage to pivot to raise or lower the cutting implement.

11. The height adjust system of claim 10, wherein the linkage comprises:
a bracket configured to be coupled to the body of the robotic vehicle:
a first arm extending between the bracket and the cutting implement; and
a second arm extending between the bracket and the cutting implement,
wherein the second arm comprises an interfacing feature supported by the helical surface such that rotation of the helical surface causes the first arm to pivot relative to the bracket to raise or lower the cutting implement.

12. The height adjust system of claim 10, wherein the helical surface interfaces with a bracket of the height adjust system at a plurality of rotational stop elements, each rotational stop element associated with a different height of the cutting implement.

13. The height adjust system of claim 9, wherein the height adjust system is configured to prevent the cutting implement from moving lower than a selected cutting height, and wherein the height adjust system is configured to permit the cutting implement to move higher than the selected cutting height.

14. The height adjust system of claim 9, further comprising a spring biasing the user interface in a direction generally opposite to the direction of translation performed to unlock the user interface.

15. A method of adjusting a cutting height of a cutting implement on a robotic vehicle, the method comprising:
translating a user interface of a height adjust system of the robotic vehicle in a first direction;
rotating the user interface about an axis of rotation oriented parallel with the first direction to select the cutting height; and
releasing the user interface after rotating the user interface, wherein releasing the user interface causes the height adjust system to lock at the selected cutting height.
